# FASCICULE DE BREVET EUROPEEN

(11) **EP 2 729 687 B1**
(45) Date de publication et mention de la délivrance du brevet: **20.01.2016**
(21) Numéro de dépôt: 12744030.3
(22) Date de dépôt: 02.07.2012
(51) Int. Cl.: F02C 7/32, F02C 7/36

(54) **BOITIER DE RELAIS D'ACCESSOIRES D'UNE TURBINE A GAZ INTEGRANT DES MOYENS DE DESACCOUPLEMENT.**
GASTURBINEN-HILFSANTRIEBS-GETRIEBEGEHÄUSE MIT INTEGRIERTER KUPPLUNG
GAS TURBINE AUXILIARY GEARBOX INCORPORATING DECOUPLING MEANS

(30) Priorité: 04.07.2011 FR 1156023
(43) Date de publication de la demande: 14.05.2014
(73) Titulaire: Hispano Suiza, 92700 Colombes (FR)
(72) Inventeur: ABOUSLEIMAN, Vincent, F-92700 Colombes (FR); FRITZ, Romaric, F-92250 La Garenne Colombes (FR)
(74) Mandataire: David, Alain
(86) Numéro de dépôt international: PCT/FR2012/051520
(87) Numéro de publication internationale: WO 2013/004958

(56) Documents cités:
- EP-A1- 0 200 178
- EP-A1- 2 199 573
- FR-A1- 2 309 731
- US-A- 5 174 109
- US-A1- 2004 065 091

## Description

### Arrière-plan de l'invention

La présente invention se rapporte au domaine général des turbines à gaz et concerne plus particulièrement un boîtier pour l'entraînement d'accessoires d'une turbine à gaz.

Le domaine d'application de l'invention est celui des turbines à gaz pour moteurs d'avions ou d'hélicoptères, ainsi que pour les groupes auxiliaires de puissance (ou APU pour « Auxiliary Power Unit »).

Les moteurs à turbine à gaz d'avions ou d'hélicoptères comportent généralement un boîtier pour l'entraînement de plusieurs accessoires de la turbine ou d'équipements annexes, tels que notamment diverses pompes pour la production d'énergie hydraulique, l'alimentation en carburant, la lubrification, des générateurs électriques par exemple de type IDG (integrated drive generator) et VFG (variable frequency generator) pour la production de puissance électrique, etc. Un tel boîtier de relais d'accessoires est communément appelé AGB pour « Accessory GearBox ».

De façon connue en soi, un boîtier de relais d'accessoires comporte un ou plusieurs trains d'engrenages qui sont composés chacun de plusieurs roues dentées et qui sont entraînés en rotation par un arbre de transmission de puissance, ce dernier étant couplé à un arbre de la turbine. Chaque accessoire est généralement monté contre l'une des faces latérales du boîtier et comporte un arbre d'alimentation venant se coupler sur l'une des roues dentées du ou des trains d'engrenages. Outre cette fonction de support d'accessoires, ces faces latérales assurent aussi une fonction de support de roulement, d'étanchéité ou encore de lubrification. Lors du fonctionnement de la turbine, une partie de la puissance mécanique générée est prélevée sur l'arbre de turbine et transmise via l'arbre de transmission de puissance et les trains d'engrenages à l'arbre d'alimentation des différents accessoires montés sur le boîtier pour les actionner.

L'encombrement des boîtiers de relais d'accessoires varie notamment en fonction du nombre et de la nature des accessoires à alimenter, lesquels sont en outre sources d'un important porte-à-faux.

Lors de l'élaboration d'un boîtier de relais d'accessoires, il est donc important de réduire le plus possible l'encombrement et la masse globale du boîtier. Dans la demande FR 09 50617, cette réduction est rendue possible en jouant sur le positionnement des accessoires les uns par rapport aux autres en fonction de leur encombrement individuel. Il existe toutefois toujours un besoin pour réduire plus encore cet encombrement et pour augmenter de façon générale la fiabilité d'un tel boitier relais.

### Objet et résumé de l'invention

La présente invention a donc pour but essentiel de proposer un boitier de relais d'accessoires d'une turbine à gaz qui permette une réduction importante de son encombrement et une augmentation notable de sa fiabilité.

Ce but est atteint grâce à un boitier de relais d'accessoires d'une turbine à gaz selon la revendication 1 ayant une face latérale avant, une face latérale arrière opposée à la face latérale avant et dont un rebord périphérique referme le boîtier, et dans lequel sont montés au moins un train d'engrenage composé de plusieurs roues dentées engrenant ensemble, chaque roue dentée étant portée par un arbre central maintenu à chacune de ses deux extrémités par un palier à roulements et destiné à être couplé à un arbre d'alimentation pour l'entrainement d'un accessoire, caractérisé en ce qu'il comporte en outre, montés entre ledit arbre central et ledit arbre d'alimentation, des moyens de désaccouplement dudit accessoire constitués par un crabot dont des dents axiales coopèrent avec une dentelure complémentaire dudit arbre central, ledit crabot comportant des cannelures internes en prise avec des cannelures externes correspondantes dudit arbre d'alimentation et en ce que lesdits moyens de désaccouplement sont commandés par un actionneur électrique agissant sur le déplacement d'un doigt plongeur dont une extrémité coopère avec une gorge hélicoïdale externe dudit crabot.

En intégrant la fonction de désaccouplement des accessoires dans le boitier, on réduit la longueur et la masse suspendue de ces accessoires donc leur porte-à-faux, on diminue l'encombrement général de l'ensemble boitier/accessoires et, en outre, on augmente la fiabilité de la fonction de désaccouplement.

Ledit accessoire est de préférence un IDG ou un VFG.

Avantageusement, ledit arbre d'alimentation est supporté dans ledit arbre central par deux paliers et il est prévu un ressort de rappel, de préférence un ressort à lames, en appui d'une part dans une rainure interne dudit crabot et d'autre part sur un rebord latéral externe dudit arbre d'alimentation pour maintenir le crabot en position d'accouplement lorsque ledit doigt plongeur est retiré de ladite gorge hélicoïdale externe.

De préférence, ledit doigt plongeur peut comporter une extrémité s'étendant hors du boitier pour permettre une commande manuelle du désaccouplement/accouplement dudit accessoire.

Avantageusement, la commande dudit actionneur électrique est effectuée par le pilote ou à partir d'un module de commande.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B montrent l'intégration d'un dispositif de désaccouplement de VFG dans un boitier relais selon l'invention ; et
- la figure 2 est une vue en coupe partielle d'un boitier pour l'entraînement d'accessoires selon l'art antérieur.

### Description détaillée de l'invention

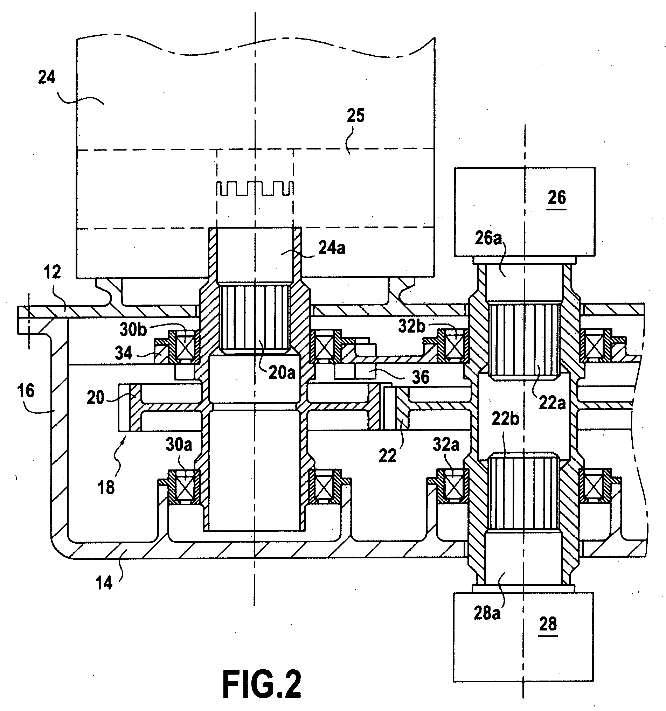

La figure 2 représente en coupe partielle un exemple d'un boitier de relais d'accessoires classique 10 d'une turbine à gaz de moteur d'avion. Bien entendu, l'invention s'applique également aux turbines à gaz de moteurs d'hélicoptères, ainsi qu'aux groupes auxiliaires de puissance.

Ce boîtier qui présente classiquement une forme de « banane » ou de « haricot » sensiblement parallélépipédique avec une face latérale avant 12, une face latérale arrière 14 opposée à la face avant et dont un rebord périphérique 16 referme le boîtier, renferme un 18 ou plusieurs trains (ou chaînes) d'engrenages qui s'étendent parallèlement à ces deux faces latérales. Un arbre de transmission de puissance (non représenté sur les figures) prélève de la puissance mécanique sur un arbre de la turbine (également non représenté) pour la transmettre au train d'engrenages 18 illustré par les deux premières roues dentées 20 et 22.

Le train d'engrenages ainsi décrit a pour fonction d'entraîner en rotation un ensemble d'accessoires de turbine distincts 24, 26, 28 et émergeant des faces latérales du boîtier 12 et 14, de façon sensiblement perpendiculaire à celles-ci.

Ces accessoires peuvent être constitués par des générateurs électriques pour fournir de la puissance électrique dont par exemple un VFG 24 intégrant ses moyens de désaccouplement 25 ; des pompes hydrauliques 26, 28 pour fournir de l'huile pressurisée au moteur et/ou à ses équipements ou de l'huile de lubrification aux circuits d'huile du moteur et/ou de ses équipements ; une pompe à carburant ; un alternateur à aimant permanent pour fournir du courant électrique à des équipements du moteur ; un démarreur pour mettre en route le moteur ; un déshuileur centrifuge, etc. Chaque accessoire comporte un arbre d'alimentation 24a à 28a qui est monté sur une roue dentée du train d'engrenages pour être mis en route, plus précisément une extrémité cannelée de l'arbre d'alimentation est introduite dans une cannelure de transmission de couple 20a ; 22a, 22b de l'arbre central supportant la roue dentée 20, 22. Chaque arbre central est maintenu, à chacune de ses deux extrémités par un palier à roulements 30a, 30b ; 32a, 32b. Comme illustré, deux accessoires 26, 28 montés contre des faces latérales du boîtier différentes peuvent avoir leur arbre d'alimentation couplé en rotation à une même roue dentée 22. On pourra aussi noter que les paliers à roulements 30b, 32b d'une des extrémités sont montés sur un support de roulements 34 distinct de la face latérale avant 14 et rattaché au rebord périphérique 16 par des moyens de fixation 36.

Les accessoires 24 à 28 ont en général des vitesses de rotation qui diffèrent (à l'exception ici des pompes hydrauliques 26 et 28 qui ont la même vitesse de rotation car montées sur la même roue dentée 22) et des volumes différents, lesquels engendrent des porte-à-faux également distincts. Or, ces porte-à faux entrainent une répartition déséquilibrée des masses supportées par le boîtier.

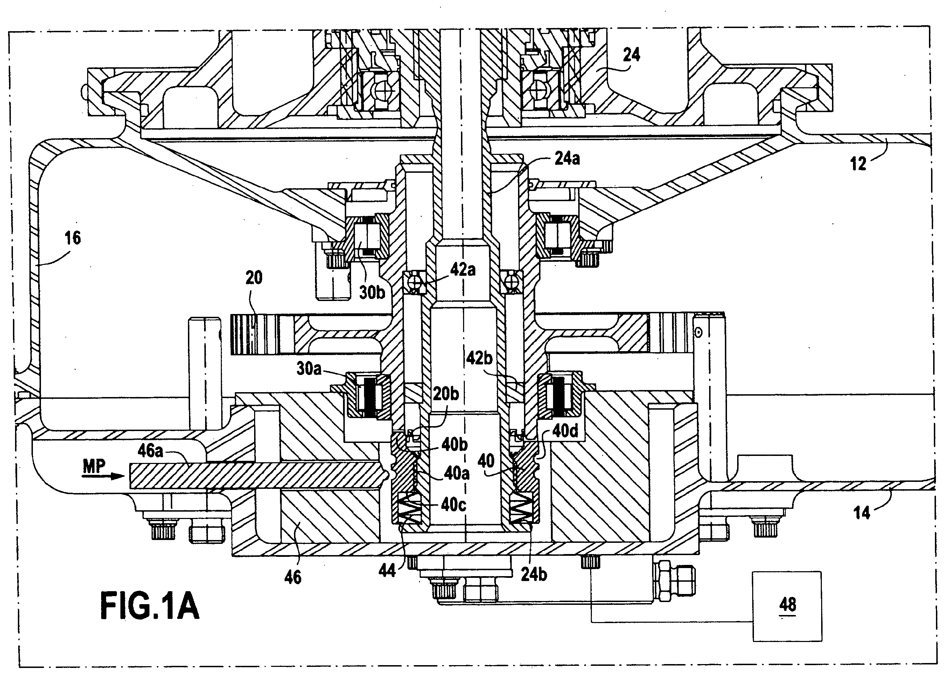

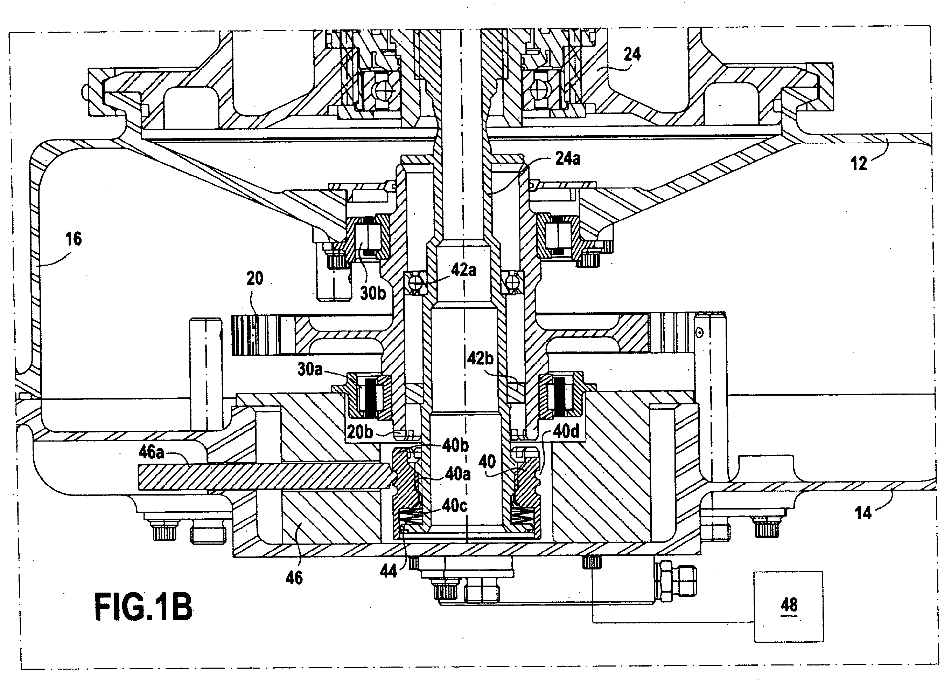

Selon l'invention et comme représenté aux figures 1A et 1B, il est proposé de réduire le porte-à-faux d'un accessoire, par exemple le VFG 24, en intégrant directement dans le boitier, les moyens de désaccouplement 25 de cet accessoire, formant habituellement partie intégrante de cet accessoire. Pour ce faire, l'arbre d'alimentation 24a du générateur 24 n'est plus en prise directe, par l'intermédiaire de ses cannelures externes, avec les cannelures internes 20a de l'arbre central de la roue dentée 20 mais avec les cannelures internes 40a d'un crabot 40 dont les dents axiales 40b coopèrent avec une dentelure complémentaire 20b de l'arbre central de la roue dentée 20. L'arbre d'alimentation 24a est supporté dans l'arbre central de la roue dentée 20 par deux paliers lisses ou à roulements 42a, 42b. Un ressort de rappel 44, par exemple à lames, en appui d'une part dans une rainure interne 40c du crabot et d'autre part sur un rebord latéral externe 24b de l'arbre d'alimentation, est prévu pour maintenir automatiquement le crabot en position d'accouplement.

Le déplacement du crabot 40 est réalisé par un actionneur électrique 46 agissant sur le déplacement d'un doigt plongeur 46a dont une extrémité coopère avec une gorge externe hélicoïdale 40d du crabot 40 (l'autre extrémité opposée s'étendant de préférence hors du boitier). La commande de l'actionneur est effectuée directement sous le contrôle du pilote ou à partir d'un module de commande 48, par exemple le GCU (Generator Control Unit). Accessoirement, comme dans l'exemple illustré, cet actionneur assure aussi le support du palier à roulements 30a.

Le fonctionnement du boitier de relais d'accessoires selon l'invention ne diffère pas de celui d'un boitier classique lorsque le crabot 40 est en prise (figure 1A), les accessoires et notamment le VFG 24, étant entrainés en rotation par le train d'engrenages 18 du boitier depuis l'arbre de la turbine moteur via l'arbre de transmission de puissance comme il est connu. On notera simplement qu'en réduisant la longueur (porte-à faux) et la masse suspendue de l'accessoire, on soulage la masse à supporter par les différents organes de transmission du boitier. Ce n'est que lorsqu'il est souhaité désaccoupler un accessoire que son fonctionnement diffère. En effet, dans cette configuration (figure 1B), le désaccouplement n'est pas effectué dans l'accessoire lui-même mais directement au niveau du boitier, le GCU ou le pilote (ou au cours d'un processus de contrôle automatique) agissant alors sur l'actionneur 46 pour déplacer le doigt plongeur 46a dans la gorge héliocoïdale du crabot 40 entrainant une translation de ce crabot suffisante pour perdre le contact des dents axiales avec la dentelure de l'arbre central de la roue dentée 20. L'arbre d'alimentation 24a n'étant plus entrainé par la roue dentée, la fonction de l'accessoire va naturellement s'interrompre. On notera que ce désaccouplement ne nécessite pas l'arrêt du fonctionnement de cet accessoire mais peut être effectué durant son fonctionnement. Pour remettre en fonction l'accessoire, il suffit de retirer le doigt plongeur 46a de la gorge héliocoïdale du crabot en commandant l'actionneur 46, ce retrait sous l'action du ressort de rappel 44 repoussant alors le crabot vers l'arbre central et donc permettant l'engagement de leur dentelure respective.

On notera que le doigt plongeur 46a ayant une extrémité s'étendant hors du boitier, une commande manuelle du désaccouplement (en poussant) ou de l'accouplement de l'accessoire (en retirant) est possible en agissant simplement sur cette extrémité (flèche MP).

Ainsi, en déplaçant la fonction de désaccouplement de l'accessoire hors de cet accessoire, on limite l'impact d'une éventuelle avarie de cet accessoire (par exemple une rupture de palier entrainant une charge excentrique) sur le désaccouplement dont la robustesse et la fiabilité est alors augmentée. Ensuite, en plaçant le désaccouplement qui est principalement mécanique dans une chaine cinématique elle-même mécanique et fonctionnant à température modérée, on éloigne ce désaccouplement de la température de fonctionnement parfois élevée de l'accessoire. Enfin, en cas de panne au niveau du désaccouplement, sa maintenance est rendue plus aisée, il suffit en effet de simplement ôter la face latérale du boitier sur lequel il est installé pour le retirer et non de changer l'accessoire en son entier, comme dans l'art antérieur.

On notera que si la description précitée a fait référence à un accessoire de type VFG (on aurait pu aussi se référer à un IDG (integrated drive generator), il est clair qu'une telle invention peut trouver application dans n'importe quel accessoire LRU (line replaceable unit) sans nécessiter aucune modification de celui-ci.

## Revendications

1. Boîtier de relais d'accessoires d'une turbine à gaz ayant une face latérale avant (12), une face latérale arrière (14) opposée à la face latérale avant et dont un rebord périphérique (16) referme le boîtier, et dans lequel sont montés au moins un train d'engrenage (18) composé de plusieurs roues dentées (20, 22) engrenant ensemble, chaque roue dentée étant portée par un arbre central maintenu dans ledit boîtier à chacune de ses deux extrémités par un palier à roulements (30a, 30b ; 32a, 32b) et destiné à être couplé à un arbre d'alimentation (24a, 26a, 28a) pour l'entrainement d'un accessoire (24, 26, 28), **caractérisé en ce qu'**il comporte en outre, montés entre ledit arbre central et ledit arbre d'alimentation dont il assure le support, des moyens (40, 42, 44, 46, 48) de désaccouplement dudit accessoire constitués par un crabot (40) dont des dents axiales (40b) coopèrent avec une dentelure complémentaire (20b) dudit arbre central, ledit crabot comportant des cannelures internes (40a) en prise avec des cannelures externes correspondantes dudit arbre d'alimentation et **en ce que** lesdits moyens de désaccouplement sont commandés par un actionneur électrique (46) agissant sur le déplacement d'un doigt plongeur (46a) dont une extrémité coopère avec une gorge hélicoïdale externe (40d) dudit crabot.

2. Boîtier selon la revendication 1, **caractérisé en ce que** ledit accessoire est un IDG ou un VFG.

3. Boîtier selon la revendication 1, **caractérisé en ce que** ledit arbre d'alimentation est supporté dans ledit arbre central par deux paliers (42a, 42b).

4. Boîtier selon la revendication 1, **caractérisé en ce qu'**il comporte en outre un ressort de rappel (44) en appui d'une part dans une rainure interne (40c) dudit crabot et d'autre part sur un rebord latéral externe (24b) dudit arbre d'alimentation pour maintenir le crabot en position d'accouplement lorsque ledit doigt plongeur est retiré de ladite gorge hélicoïdale externe.

5. Boîtier selon la revendication 4, **caractérisé en ce que**, ledit ressort de rappel est un ressort à lames.

6. Boîtier selon la revendication 1, **caractérisé en ce que** ledit doigt plongeur comporte une extrémité s'étendant hors du boitier pour permettre une commande manuelle du désaccouplement/accouplement dudit accessoire.

7. Boîtier selon la revendication 1, **caractérisé en ce que** la commande dudit actionneur électrique est effectuée par le pilote ou à partir d'un module de commande (48).

8. Boîtier selon l'une quelconque des revendications 1 à 7, **caractérisé en ce que** ledit arbre central est maintenu à chacune de ses deux extrémités par un palier à roulements (30a, 30b ; 32a, 32b).

## Patentansprüche

1. Hilfsgerätegetriebegehäuse einer Gasturbine, das eine vordere Seitenfläche (12), eine hintere Seitenfläche (14), die der vorderen Seitenfläche gegenüberliegt und von der ein Umfangsrand (16) das Gehäuse verschließt, aufweist und in dem wenigstens ein Zahnradgetriebe (18), das aus mehreren miteinander in Eingriff stehenden Zahnrädern (20, 22) besteht, angebracht ist, wobei jedes Zahnrad durch eine mittlere Welle getragen ist, die in dem Gehäuse an jedem ihrer beiden Enden durch ein Wälzlager (30a, 30b; 32a, 32b) gehalten und dazu bestimmt ist, mit einer Versorgungswelle (24a, 26a, 28a) für den Antrieb eines Hilfsgerätes (24, 26, 28) gekuppelt zu werden, **dadurch gekennzeichnet, dass** es ferner - zwischen der mittleren Welle und der Versorgungswelle, deren Tragen sie sicherstellt, angebracht - Mittel (40, 42, 44, 46, 48) zum Entkuppeln des Hilfsgerätes umfasst, die durch eine Klaue (40) gebildet sind, von welcher axiale Zähne (40b) mit einer ergänzenden Zahnung (20b) der mittleren Welle zusammenwirken, wobei die Klaue Innenrillen (40a), die mit entsprechenden Außenrillen der Versorgungswelle in Eingriff sind, umfasst, und dass die Entkupplungsmittel durch ein elektrisches Stellglied (46), das auf die Bewegung eines Tauchfingers (46a) wirkt, von dem ein Ende mit einer schraubenförmigen Außennut (40d) der Klaue zusammenwirkt, betätigt werden.

2. Gehäuse nach Anspruch 1, **dadurch gekennzeichnet, dass** das Hilfsgerät ein IDG oder ein VFG ist.

3. Gehäuse nach Anspruch 1, **dadurch gekennzeichnet, dass** die Versorgungswelle in der mittleren Welle durch zwei Lager (42a, 42b) getragen ist.

4. Gehäuse nach Anspruch 1, **dadurch gekennzeichnet, dass** es ferner eine Rückstellfeder (44) umfasst, die einerseits in einer Innennut (40c) der Klaue und andererseits an einem äußeren Seitenrand (24b) der Versorgungswelle in Anlage ist, um die Klaue in Kupplungsposition zu halten, wenn der Tauchfinger aus der schraubenförmigen Außennut zurückgezogen ist.

5. Gehäuse nach Anspruch 4, **dadurch gekennzeichnet, dass** die Rückstellfeder eine Blattfeder ist.

6. Gehäuse nach Anspruch 1, **dadurch gekennzeichnet, dass** der Tauchfinger ein sich außerhalb des Gehäuses erstreckendes Ende aufweist, um eine manuelle Betätigung des Entkuppelns/Kuppelns des Hilfsgerätes zu ermöglichen.

7. Gehäuse nach Anspruch 1, **dadurch gekennzeichnet, dass** die Steuerung des elektrischen Stellgliedes durch den Piloten oder mit Hilfe eines Steuermoduls (48) bewerkstelligt wird.

8. Gehäuse nach einem der Ansprüche 1 bis 7, **dadurch gekennzeichnet, dass** die mittlere Welle an jedem ihrer beiden Enden durch ein Wälzlager (30a, 30b; 32a, 32b) gehalten ist.

## Claims

1. A gas turbine AGB having a front lateral face (12) and a rear lateral face (14) opposite from the front lateral face and having a peripheral rim (16) closing the box, and in which there is mounted at least one gear train (18) made up of a plurality of gearwheels (20, 22) meshing together, each gearwheel being carried by a central shaft held in said AGB at each of its two ends by a respective rolling bearing (30a, 30b; 32a, 32b) and designed to be coupled to a drive shaft (24a, 26a, 28a), for driving an accessory (24, 26, 28), the AGB being **characterized in that** it further comprises, mounted between said central shaft and said drive shaft which it provides support, decoupling means (40, 42, 44, 46, 48) for decoupling said accessory and constituted by a dog clutch (40) having axial teeth (40b) co-operating with complementary teeth (20b) of said central shaft, said dog clutch including internal fluting (40a) engaged with the corresponding external fluting of said drive shaft, and **in that** said decoupling means are controlled by an electric actuator (46) acting on the movement of a plunger pin (46a) having one end co-operating with an outer helical groove (40d) in said dog clutch.

2. An AGB according to claim 1, **characterized in that** said accessory is an IDG or a VFG.

3. An AGB according to claim 1, **characterized in that** said drive shaft is supported in said central shaft by two bearings (42a, 42b).

4. An AGB according to claim 1, **characterized in that** it further comprises a return spring (44) bearing firstly against an internal groove (40c) of said dog clutch and secondly against an external lateral rim (42b) of said drive shaft in order to hold the dog clutch in the coupling position so long as said plunger pin is withdrawn from said outer helical groove.

5. An AGB according to claim 4, **characterized in that** said return spring is a leaf spring.

6. An AGB according to claim 1, **characterized in that** said plunger pin has an end extending outside the AGB in order to enable coupling and/or decoupling of said accessory to be controlled manually.

7. An AGB according to claim 1, **characterized in that** said electric actuator is controlled by the pilot or from a control module (48).

8. An AGB according to any one of claims 1 to 7, **characterized in that** said central shaft is held at each of its two ends by a respective rolling bearing (30a, 30b; 32a, 32b).
